# EUROPEAN PATENT APPLICATION

(11) **EP 1 548 242 A1**
(43) Date of publication of application: **29.06.2005**
(21) Application number: 03799165.0
(22) Date of filing: 29.09.2003
(51) Int. Cl.: F01N 3/00, F02D 45/00, F02D 29/02, G07B 15/00, B60K 35/00

(54) **EMISSION AMOUNT REPORT DEVICE, SYSTEM FOR CHARGE FOR EXHAUST GAS FROM VEHICLE, MANAGEMENT UNIT AND INSPECTION DEVICE MAKING UP THE SYSTEM**

(30) Priority: 03.10.2002 JP 2002291616; 15.04.2003 JP 2003110042; 16.05.2003 JP 2003139575
(71) Applicant: SUMITOMO ELECTRIC INDUSTRIES, Ltd, Osaka-shi, Osaka 541-0041 (JP)
(72) Inventor: YUSHIO, Yasuhisa Osaka Works, SUMITOMO EL. IND LTD, Osaka-shi, Osaka 554-8511 (JP); OHASHI, Shingo Osaka Works of SUMITOMO EL. IND LTD, Osaka-shi, Osaka 554-8511 (JP)
(74) Representative: Cross, Rupert Edward Blount
(86) International application number: PCT/JP2003/012450
(87) International publication number: WO 2004/031547

(57) **Abstract**

For improving driver's awareness about emissions and promoting environmental protection, an emission amount notifying device is provided. When such a taxation system becomes effective that a tax is imposed in accordance with an amount of one or more kinds of harmful substances, which include a carbon dioxide, nitrogen oxides, sulphur oxides and hydrocarbons emitted from a vehicle, a sensor (40) determines the emission amounts of respective harmful substances, and a CPU (22) obtains the amount of tax corresponding to the determined emission amounts from a ROM (26) storing tax information related to the tax amounts corresponding to respective displacements, and displays the obtained tax amount on a display device (42). Further, the CPU (22) sends the information relating to the determined emission amount to a server (34) of authorities from a communication unit (30) for performing tax payment procedures.

## Description

### Technical Field

The present invention relates to an emission amount notifying device and an emission charging system for a vehicle as well as a management unit and an inspection device forming the system. In particular, the invention relates to an emission amount notifying device providing information relating to an amount of harmful substances emitted from vehicles such as a car, an emission charging system automatically charging money in accordance with an amount of the emissions of vehicles, and an emission charging system capable of checking a normal operation of a vehicle-mounted device or unit as well as a management unit and an inspection device forming such systems.

### Background Art

In recent years, attention has been focused on environmental issues such as global warming. For example, harmful substances such as carbon dioxide in exhaust gases or emissions of vehicles have become issues. Also, harmful substances such as nitrogen oxides and sulphur oxides causing air pollution have become issues. As efforts for environmental matters, systems and devices such as an after-treatment device have been developed for reducing an amount of harmful substances emitted from vehicles.

However, many vehicle drivers have hardly recognized environmental loads due to harmful substances contained in the emissions of vehicles. For example, drivers often fail or neglect maintenance of emission-cleanup devices. Also, drivers often perform unnecessary idle driving. These situations are caused by various factors including such a factor that there is no manner or means, which makes the drivers of running vehicles aware of the environmental loads caused by the harmful substances in the emissions.

For making the drivers aware of the environmental loads caused by the harmful substances in the emissions, such a system may be envisaged that a sensor detecting an amount of emitted harmful substances such as carbon dioxide is mounted on a vehicle, and a display device mounted on the vehicle for displays the amount of harmful substances detected by the sensor for notifying the driver of it. However, even if the detected amount of emissions is displayed, e.g., in units of ppm (parts per million), many drivers not having expert knowledge about it cannot probably understand substantial meaning of the detected emission amounts. For example, many drivers cannot probably understand a degree or extent of environmental influences exerted by the displayed emission amount, and cannot determine whether the displayed emission amount is large or small. Thus, the above system cannot effectively make the drivers aware of the environmental loads.

Exhaust gases of vehicles such as an automobile having internal combustion engines contain harmful substances such as CO and NOₓ causing air pollution. Automobiles and others are usually designed to remove the harmful substances from the exhaust gas by flowing it through a catalyst before discharging the gas into the atmosphere. At the present time, however, it is difficult to remove completely the harmful substances from the exhaust gas.

For sufficiently achieving the cleaning operation by the catalyst, the exhaust gas must be kept at a high temperature equal to or higher than an activation temperature so that the exhaust gas passed through the catalyst is very hot. Since the exhaust gas, which is hot and contains pollutants, carbon dioxide and others, is released into the atmosphere, this significantly affects the environment and the global warming.

For various reasons including the signing of Kyoto Protocol, our country must make significant efforts to reduce the carbon dioxide and others. In the industrial fields, the efforts for reducing the carbon dioxide have been gradually yielding results. In the consumer fields and transportation fields, however, the efforts have not yet yielded substantial results. In the transportation fields, it has been tried to reduce the amount of emissions by employing fuel-efficient vehicles, but replacement of current vehicles with fuel-efficient vehicles cannot been rapidly achieved so that many current vehicles will be used for the time being. Accordingly, it is important to reduce the emissions.

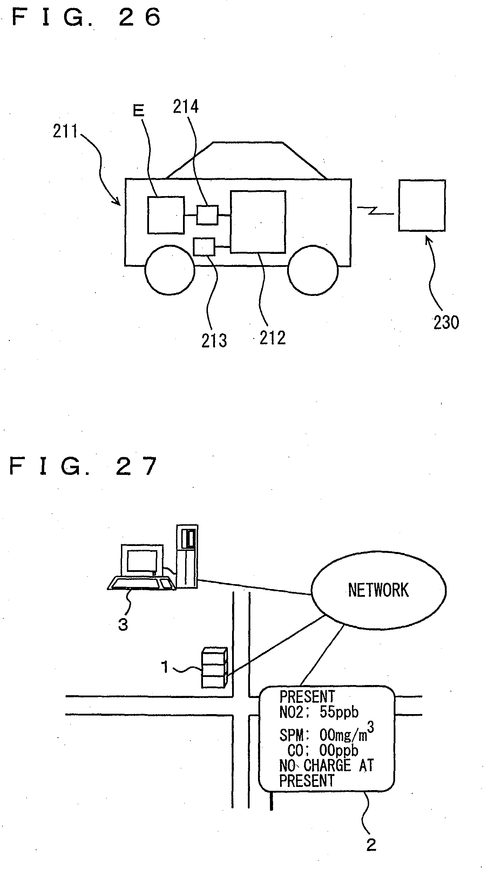

For examples, Japanese Patent Laying-Open No. 2001-319252 has disclosed a system shown in Fig. 27. In this system, a measuring device 1 and an electronic signboard 2 are arranged near a crossing of roads, and measuring device 1 measures a density of the carbon dioxide and others, and sends a measurement to a computer 3 for control over a network. The measurement thus sent is compared with a predetermined higher limit. If the measurement exceeds the higher limit, the system starts the charging when specific types of vehicles such as diesel engine automobiles, which generally emit large amounts of pollution substances, pass through a gate, and displays a status of the charging on electronic signboard 2.

However, the system disclosed in Japanese Patent Laying-Open No. 2001-319252 uniformly charges all the specific types of vehicles passing through the gate. Therefore, a diesel engine automobile, which was once determined as a target of charging, may be charged even after it stops emission of an exhaust gas by stopping an engine in an area following the gate. In this case, it is difficult to manage the charging in accordance with the running situation of each vehicle.

The emission amount can be reduced by various measures such as running at an economic speed and reduction of a travel distance. In particular, it is desired to minimize wasteful idling because a driver of a long-haul driver or the like, who is sleeping in a parking area during the night, often keeps the idling state for operating an air-conditioner, and this idling wastes a fuel and emits an exhaust gas, resulting in environmental problems.

### Disclosure of the Invention

The invention has been developed in view of the above, and an object of the invention is to provide an emission amount notifying device, which displays an emission amount by a number of units such as a point number, and thereby allows easy determination of a magnitude of the emission amount by viewing the point number so that the driver's understanding and interest about the emission amount can be enhanced.

Another object of the invention is to provide an emission amount notifying device, which displays an emission value corresponding to a difference between an emission amount and a standard value, and thereby allows easy determination of a magnitude of the emission amount based on the standard value so that the driver's understanding and interest about the emission amount can be enhanced.

Still another object of the invention is to provide an emission amount notifying device, which can operate when such a taxation system becomes effective that taxation is performed according to an emission amount of predetermined substances emitted from a vehicle, and particularly can operate to notify a driver of an amount of tax corresponding to the emission amount so that the driver's understanding and interest about the emission amount can be enhanced.

Yet another object of the invention is to provide an emission amount notifying device, which displays an emission amount by display means, and thereby allows visual determination of the emission amount.

Further another object of the invention is to provide an emission amount notifying device, which can provide a notification by detecting an emission amount(s) of at least one of a carbon dioxide, nitrogen oxides, sulphur oxides and hydrocarbons in emissions of a vehicle.

A further object of the invention is to provide an emission amount notifying device, which can send information relating to a detected emission amount to tax authorities or the like for allowing rapid and easy tax procedures when such a taxation system becomes effective that taxation is performed according to an emission amount of predetermined substances emitted from a vehicle A further object of the invention is to provide a system, which manages emission situations of exhaust gases on a vehicle-by-vehicle basis, and thereby can promote reduction of the amount of emissions.

A further object of the invention is to provide a system, which manages emission situations of exhaust gases during idling on a vehicle-by-vehicle basis, thereby can promote reduction of the amount of emissions, and can check an abnormal operation of a vehicle-mounted device on a vehicle.

For achieving the above objects, an emission amount notifying device according to an aspect of the invention includes detecting means for detecting an emission amount of a predetermined substance emitted from a vehicle; converting means for converting the emission amount detected by the detecting means to a number ofunit(s); and notifying means for notifying of the number of unit(s) obtained by the conversion.

According to the invention, the detecting means detects the amount of the predetermined substance emitted from the vehicle, the converting means converts the detected emission amount to the number of unit(s), and the notifying means notifies of the number ofunit(s) obtained by the conversion. For example, one unit corresponds to the emission amount equal to 1/5 of a standard emission amount, and the number of units equal to five is used as a reference or standard amount for providing the notification of the number of unit(s). The emission amount corresponding to one unit is stored in advance, e.g., in storing means. In the case of the above example, when the number of units is 10, the emission amount is substantially double the standard. When the number of unit is 2, the emission amount is approximately 2/5 of the standard. For example, when such a taxation system becomes effective that a predetermined amount of tax is imposed corresponding to a predetermined emission amount of predetermined substances emitted from a vehicle, this predetermined emission amount may be determined as one unit, and notification of the number of units corresponding to the tax amount can be provided.

According to another aspect of the invention, an emission amount notifying device includes detecting means for detecting an emission amount of a predetermined substance emitted from a vehicle; calculating means for calculating the emission amount corresponding to a difference between the emission amount detected by the detecting means and a standard value; and notifying means for notifying of the calculated emission value.

According to the invention, the detecting means detects the amount of the predetermined substance emitted from the vehicle, the calculating means calculates the emission value corresponding to the difference between the detected emission amount and the standard value, and the notifying means provides the notification of the calculated emission value. The standard value is a standard amount of emissions, and is stored in advance, e.g., in storing means.

According to still another aspect of the invention, an emission amount notifying device includes detecting means for detecting an emission amount of a predetermined substance emitted from a vehicle; storing portion for storing an amount of money corresponding, in advance, to the emission amount; obtaining means for obtaining from the storing portion the amount of money corresponding to the emission amount detected by the detecting means; and notifying means for notifying of the obtained amount of money.

According to the invention, the storing means stores, in advance, the amount of money determined corresponding to the emission amount, the detecting means detects the amount of the predetermined substance emitted from the vehicle, the obtaining means obtains the amount of money corresponding to the detected emission amount, and the notifying means provides a notification of the obtained amount of money. For example, when such a taxation system becomes effective that taxation is performed according to an emission amount of predetermined substances emitted from a vehicle, the storing means stores the relationship between the emission amounts and the amounts of money.

Preferably, the notifying means includes a display device.

According to the invention, the notifying means includes the display device, and may numerically display the emission amount. Alternatively, it may display a graph such as a bar graph representing the emission amount, or may selectively display various images corresponding to the emission amount.

Preferably, the predetermined substance includes one or more of a carbon dioxide, nitrogen oxides, sulphur oxides and hydrocarbons.

According to the invention, the predetermined substance detected by the detecting means includes one or more of the carbon dioxide, nitrogen oxides, sulphur oxides and hydrocarbons. The detecting means detects the emission amount of harmful substances such as a carbon dioxide, which is considered to cause global warming as well as nitrogen oxides, sulphur oxides and hydrocarbons causing atmospheric pollution, and the notifying means provides the notification of the detected emission amount.

Preferably, the device further includes sending means for sending information related to the emission amount detected by the detecting means.

According to the invention, the sending means sends the information related to the detected emission amount. For example, when such a taxation system becomes effective that taxation is performed according to an amount of predetermined substances emitted from a vehicle, the sending means sends the information related to the detected emission amount of the predetermined substance, e.g., to a server operated by tax authorities for performing tax procedures.

According to yet another aspect of the invention, a vehicle emission charging system includes a vehicle-mounted device having idling detecting means for detecting an idling state of a vehicle and wireless communication means connected to a communication network; a management unit receiving idling the information obtained by the vehicle-mounted device over the communication network, and charging for emissions of the vehicle; and a mobile inspection device performing communication with the vehicle-mounted device over the communication network, and checking a normal operation of the vehicle-mounted device. The inspection device sends a vehicle ID to the management unit over the communication network, the management unit sends a connection ID for communication with the vehicle-mounted device to the inspection device based on the received vehicle ID, and the inspection device checks the normal operation of the vehicle-mounted device by establishing the communication with the vehicle-mounted device based on the connection ID.

According to the invention, automatic charging can be performed for the idling state, in which the vehicle is emitting an exhaust gas without running. Thereby, it is possible to make a vehicle driver aware of necessity to stop wasteful idling, and this contributes to reduction of emissions of CO₂ and pollution substances as well as reduction of fuel consumption.

In addition to the above, a police officer on patrol or the like may carry the above inspection device so that the officer can check the normal operation of the vehicle-mounted device detecting the idling state of the vehicle. Therefore, the officer can find situations such as illegal stop of the vehicle-mounted device or a failure thereof.

The inspection device makes an inquiry to the management unit based on the vehicle ID (e.g., vehicle license number or vehicle-mounted device ID), and thereby obtains the connection ID for wireless communication with the vehicle-mounted device so that the inspection device can communicate with an arbitrary vehicle to check the normal operation of the vehicle-mounted device thereof. Further, the connection is established over the communication network by making the inquiry to the management unit so that the inspection device can be remote from the vehicle.

For making the inquiry based on the ID of the vehicle-mounted device, the ID of the vehicle-mounted device must be displayed on the outside of the vehicle so that an operator of the inspection device can read the ID of the vehicle-mounted device.

According to a further aspect of the invention, an emission charging system for a vehicle includes a vehicle-mounted device having idling detecting means for detecting an idling state of a vehicle, wireless communication means connected to a communication network, and short-range wireless communication means not connected to the communication network; a management unit receiving the idling information obtained by the vehicle-mounted device over the communication network, and charging for emissions of the vehicle; and an inspection device communicated with the vehicle-mounted device by short-range wireless communication, and checking a normal operation of the vehicle-mounted device. The inspection device checks the normal operation of the vehicle-mounted device by performing the short-range wireless communication to communicate directly with the vehicle-mounted device located within a communication-allowed area from the vehicle.

According to this invention, since the inspection device located near the vehicle directly communicates with the vehicle-mounted device, it is not necessary to use the communication network and the management unit so that a communication cost can be reduced. Further, the communication can be reliably established without causing such a situation that it is outside a communication area, as long as it is located within a predetermined distance range.

For the short-range wireless communication, it is preferable to use, e.g., infrared communication, wireless LAN (Local Area Network), Bluetooth or UWB (Ultra-Wide Band). In particular, the infrared communication, which allows only short-range communication with high directivity, is preferable because it can prevent crosstalk with another vehicle-mounted device, and is inexpensive.

The system is configured such that penalties such as a fine and/or reduction of license points are imposed on a manager of the vehicle when the above inspection device determines an abnormal operation of the vehicle-mounted device.

According to the above setting, a fine and/or reduction of license points are imposed on the manager of the vehicle when the vehicle-mounted device does not operate normally. This is effective at preventing such situations that the manager illegally stops the vehicle-mounted device, or leaves the failure of the vehicle-mounted device.

The vehicle includes display means. The management unit sends an amount of money, which is charged to the vehicle, over the communication network to the vehicle, and the display means displays the charged amount of money.

According to this structure, since a driver can be informed of the charged amount of money, this can create the awareness about stopping of wasteful idling, and can improve the driver's environmental awareness. Audio means or the like may be employed to give warning by voice.

The charged amount of money is deducted automatically from a bank account designated by the manager of the vehicle. If such deduction is impossible due to an insufficient balance of the account, the management unit provides a notification to the vehicle-mounted device over the communication network to display warning by the display means.

The charging side can be configured to deduct the charged amount from the account designed by the vehicle manager, and this can save the labor of the system operator. When the balance of the account is insufficient, the display means displays the warning to request deposition of money into the account.

The charge may be deducted from the personal account of the vehicle manager, but alternatively may be deducted from a dedicated account, which is opened in advance for receiving the charge prepaid by the vehicle manager. Further, the system operator may tie up with a credit card company so that the charge can be paid by a credit card.

It is preferable to impose an extra charge when payment is impossible due to the insufficient balance of the account.

This ensures the payment because the vehicle manager of the charging target usually wants to avoid the extra charge.

The idling detecting means includes engine operation state detecting means for detecting stop/drive of an engine, and run/stop detecting means for detecting the stop state of the vehicle, and recognizes the idling state from engine drive information provided from the engine operation state detecting means and vehicle-stop information provided from the run/stop detecting means.

According to the above structure, the idling state, in which the engine is operating during stop of the vehicle, can be recognized based on the engine drive information and the vehicle-stop information. Further, an idling duration can be calculated from a difference between an engine driving time and a vehicle running time, or from a difference between a vehicle-stop time and an engine non-driving time.

The vehicle often enters the idling state, in which the vehicle stops for waiting at traffic light or warming before starting, or due to a traffic jam or the like. Therefore, it is desired to charge only for the case, in which the vehicle stops for a predetermined time or more (e.g., 10 minutes or more) while continuing the idling state.

The idling duration may be calculated on the management unit side. Alternatively, the idling duration may be calculated on the vehicle side, and may be sent to the management unit.

According to a further aspect of the invention, an emission charging system for a vehicle includes engine operation state detecting means for detecting stop/drive of an engine on the vehicle; wireless communication means mounted on the vehicle and connected to a communication network; and a management unit connected to the communication network, and charging for emissions of the vehicle. The management unit performs the charging according to an amount of the emissions of the vehicle based on engine drive information provided from the engine operation state detecting means.

According to the above structure, since each vehicle can be individually charged corresponding to the amount of the emissions of each vehicle, fair charging can be performed without causing unfairness, which may be caused by uniform charging. Also, the system can make the vehicle driver aware of the necessity to minimize the emission of the exhaust gas. This contributes to reduction of emissions of CO₂ and pollution substances as well as reduction of fuel consumption. As the engine operation state detecting means, a sensor or the like measuring an engine speed is preferably used, and a data communication device utilizing a cellular phone network is preferably used as the wireless communication means.

The vehicle is provided with run/stop detecting means, and the system calculates the idling duration, the amount of the emissions corresponding to the idling duration and an amount of a charge for the amount of the emissions from the vehicle-stop information provided from the run/stop detecting means and the engine drive information.

The idling duration may be calculated on the management unit side. Alternatively, the idling duration may be calculated on the vehicle side, and may be sent to the management unit.

According to the above structure, the changing can be performed only for the state, in which the vehicle is emitting the exhaust gas without running. This can promote reduction of useless emission of the exhaust gas as well as reduction of the fuel consumption.

Preferably, the idling duration of the engine during stop of the vehicle can be calculated from a difference between the engine drive time and the vehicle running time, or from a difference between the vehicle-stop time and the engine non-drive time.

The vehicle often enters the idling state, in which the vehicle stops for waiting at traffic light or warming before starting, or due to a traffic jam or the like. Therefore, it is desired to charge only for the case, in which the vehicle stops for a predetermined time or more (e.g., 10 minutes or more) while continuing the idling state.

The run/stop detecting means includes at least one of a vehicle speed sensor, a GPS (Global Positioning System), an acceleration sensor.

The vehicle speed sensor can determine the time or duration of the vehicle-stop state by handling the time, for which the detected vehicle speed is zero, as the vehicle-stop time, and handling the time of the driving at a speed other than zero as the vehicle drive time. According to the system using the GPS, it is possible to determine, based on absolute position coordinates of the vehicle, whether the vehicle is running or not, and thereby the vehicle running time and the vehicle-stop time can be obtained. According to the system using the acceleration sensor, such a state can be determined as the vehicle-stop state that the acceleration sensor does not detect vibrations of a predetermined magnitude or more, because irregularities on a road necessarily cause vibrations during the vehicle running.

Since the vehicle speed sensor is arranged on or around a wheel or the like, the structure employing the vehicle speed sensor must transmit a sensor signal to the wireless communication means, which is an interface to the communication network, via a connection cable. However, the acceleration sensor can be employed without restrictions on its position, and can be arranged inside a device having the wireless communication means. Therefore, the system using the acceleration sensor can eliminate the connection cable, connection interface and attaching operations so that the structures on the vehicle side can be simple and inexpensive. The vehicle speed sensor, GPS and/or acceleration sensor may be used in combination to improve the accuracy of detection of the vehicle-stop state.

Preferably, conditions for setting an amount of the charge include an engine displacement, vehicle position information and/or an ambient temperature at the vehicle position.

Since the engines of different displacements emit different amounts of exhaust gases during the same idling duration, respectively, higher charges per time can be imposed on vehicles of large displacements such as large trucks so that fair charging can be performed.

The charge can be high during a season or period not requiring the operation of the air-conditioner owing to a comfortable ambient temperature, and the charge can be reduced in the coldest season or midsummer. However, even if the determination for this is performed based on the date, the temperature conditions and others significantly vary depending on regions. Therefore, the charging can be performed more fairly by taking an ambient temperature at the position of the vehicle into consideration.

The ambient temperature at the vehicle position can be determined by temperature detecting means on the vehicle, or can be determined from global temperature information based on the vehicle position information provided from the GPS.

When using the vehicle position information provided from the GPS, it is preferable to determine the ambient temperature by obtaining the local temperature information, which corresponds to the determined absolute position coordinates of the vehicle, from a weather information providing company.

When a failure occurs in any one of the engine operation state detecting means, the wireless communication means, the run/stop detecting means and the temperature detecting means mounted on the vehicle, warning about the failure is sent to a driver of the vehicle.

Thereby, it is possible to provide notification for preventing incorrect charging to the vehicle manager, and for preventing unfair or illegal action by the vehicle manager. The notification or warning may be preferably performed by sound as well as display.

The vehicle includes display means. The management unit sends an amount of money, which is charged to the vehicle, to the vehicle via the communication network and the wireless communication means, and the display means displays the charged amount of money.

The above structure can inform the driver of the charged amount of money. Therefore, the system can make the driver aware of the necessity to eliminate wasteful driving of the engine, and thus can improve the driver's environmental awareness.

The charged amount of money thus sent to the vehicle may be deducted from an account designated by a manager of the vehicle. This can save the labor of the operator operating the system.

The charge may be deducted from the personal account of the vehicle manager, but alternatively may be deducted from a dedicated account of the system operator, which is opened in advance for receiving the charge prepaid by the vehicle manager. In this case, communication with the management unit is performed to display the balance of the account when deducting the charge so that the money for deduction can be added to the account if the balance is insufficient. The system operator may tie up with a credit card company so that the charge can be paid by a credit card.

According to a further aspect of the invention, a management unit capable of communication with a vehicle-mounted device on a vehicle, includes receiving means for receiving times of start and stop of idling of the vehicle from the vehicle-mounted device; calculating means for calculating an amount of emissions during idling from the received idling start time and the received idling stop time, and calculating an amount of a charge corresponding to the amount of the emissions; and sending means for sending the calculated amount of the charge to the vehicle-mounted device.

Preferably, the management unit further includes obtaining means for sending the idling start time and the idling stop time to a server of a weather information center, and obtaining information about temperature change in a corresponding time zone. The calculating means determines a unit charge from the obtained temperature change information and a displacement of the vehicle.

Preferably, the management unit further sends an instruction to a server of a banking organ to deduct the charged amount from an account of an owner of the vehicle.

According to a further aspect, an inspection device includes input means for inputting a vehicle ID; sending means for sending the input vehicle ID to a management unit charging for emissions of a vehicle; receiving means for receiving from the management unit a connection ID for communication with a vehicle-mounted device mounted on the vehicle in response to sending of the vehicle ID; communication establishing means for establishing the communication with the vehicle-mounted device by using the received connection ID; and determining means for checking a normal operation of the vehicle-mounted device by determining whether the communication establishing means established the communication or not.

According to a further aspect of the invention, a management unit includes first receiving means for receiving a vehicle ID, an idling start time and an idling end time from a vehicle-mounted device mounted on a vehicle; calculating means for calculating an amount of emissions during an idling duration from the received idling start time and the received idling stop time, and calculating an amount of a charge corresponding to the amount of the emissions; a database storing a log of the received idling start time, the received idling end time and the calculated amount of the charge for each received vehicle ID; second receiving means for receiving the vehicle ID, the idling start time and the idling end time of the vehicle from an inspection device capable of communication with the vehicle-mounted device; and determining means for determining whether the database has stored the log of the idling start time and the idling end time of the vehicle ID received from the inspection device or not.

Preferably, the management unit further includes determination result sending means for sending results of the determination performed by the determining means to the inspection device.

### Brief Description of the Drawings

Fig. 1 is a block diagram illustrating an example of an emission amount notifying device according to the invention.
Fig. 2 shows an example of a display device.
Fig. 3 is a block diagram illustrating another example of the emission amount notifying device according to the invention.
Fig. 4 shows an example of a display screen.
Fig. 5 is a block diagram illustrating further another example of the emission amount notifying device according to the invention.
Figs. 6A - 6D show examples of displayed images.
Fig. 7 illustrates a whole structure of an emission charging system of a fourth embodiment of the invention.
Fig. 8 is a block diagram of a main device.
Fig. 9 is a flowchart illustrating processing steps on a vehicle side.
Fig. 10 is a flowchart illustrating processing steps on a management unit side.
Fig. 11 illustrates a frame format of packet data sent from the vehicle to the management unit.
Fig. 12 illustrates a frame format of packet data sent from the management unit to the vehicle.
Fig. 13 is a block diagram illustrating a main device of a fifth embodiment.
Fig. 14 is a frame format of packet data sent from the vehicle to the management unit in a second embodiment.
Fig. 15 illustrates a whole structure of an emission charging system of a sixth embodiment of the invention.
Fig. 16 is a block diagram of an main device.
Fig. 17 is a block diagram of an inspection device.
Fig. 18 is a flowchart illustrating processing steps of a vehicle-mounted device for charging processing.
Fig. 19 is a flowchart illustrating processing steps of a management unit for the charging processing.
Fig. 20 is a flowchart illustrating batch processing of the management unit.
Fig. 21 is a flowchart illustrating processing steps of an inspection device for the management processing.
Fig. 22 is a flowchart illustrating determination processing executed by the management unit.
Fig. 23 is a flowchart illustrating the determination processing executed by the inspection device.
Fig. 24 is a flowchart illustrating processing steps of the management unit for monitoring processing.
Fig. 25 is a flowchart illustrating processing steps of a vehicle-mounted device for the monitoring processing.
Fig. 26 illustrates monitoring with infrared communication.
Fig. 27 illustrates a conventional system.

### Best Modes for Carrying Out the Invention

Embodiments of the invention will now be described with reference to the drawings.

### (First Embodiment)

A first embodiment will now be described in connection with a case, in which such a taxation system becomes effective that taxes are levied on predetermined harmful substances emitted from vehicles. For example, it is assumed that taxes are levied on the emission amount of carbon dioxide, nitrogen oxides and sulphur oxides.

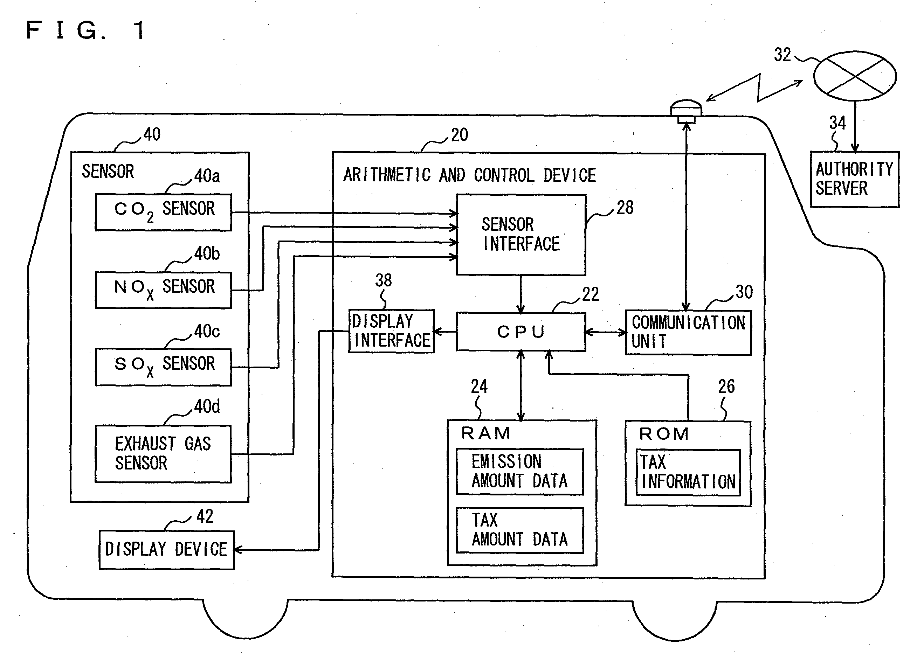

Fig. 1 illustrates an example of an emission amount notifying device according to the invention. The emission amount notifying device includes a sensor 40 detecting an amount of predetermined harmful substances emitted from a vehicle, a display device 42 such as a liquid crystal display or a CRT (Cathode Ray Tube) display mounted on the vehicle, and an arithmetic and control device 20 connected to sensor 40 and display device 42.

Sensor 40 operates as means for detecting an amount of emitted harmful substances such as carbon dioxide, nitrogen oxides, sulphur oxides and hydrocarbons contained in an exhaust gas. In this example, sensor 40 includes a CO₂ sensor 40a detecting the carbon dioxide (CO₂), an NOₓ sensor 40b detecting the nitrogen oxides (NOₓ), an SOₓ sensor 40c detecting the sulphur oxides (SOₓ) and an exhaust gas sensor 40d detecting an amount of the exhaust gas.

Arithmetic and control device 20 includes a CPU (Central Processing Unit) 22, an sensor interface 28, a RAM (Random Access Memory) 24, a ROM (Read Only Memory) 26, a communication unit 30 and a display interface 38.

Sensor interface 28 is connected to sensor 40 (CO₂ sensor 40a, NOₓ sensor 40b, SOₓ sensor 40c and exhaust gas sensor 40d) for receiving detection signals from these sensors. When the received detection signal is an analog signal, sensor interface 28 performs the processing such as conversion to a digital signal, and sends the detection signal to CPU 22.

Based on the detection signal data received from sensor interface 28, CPU 22 calculates the amount of the carbon dioxide, nitrogen oxides and sulphur oxides based on the detection signal data received from sensor interface 28, and stores the calculated emission amount (emission amount data) in RAM 24. In this embodiment, exhaust gas sensor 40d detects the amount of exhaust gas. CO₂ sensor 40a, NOₓ sensor 40b and SOₓ sensor 40c detect contents of the carbon dioxide, nitrogen oxides and sulphur oxides in the exhaust gas, respectively. CPU 22 calculates the amounts of the emitted carbon dioxide, nitrogen oxides and sulphur oxides based on the detected emission amount and the respective contents. Alternatively, CO₂, NOₓ and SOₓ sensors 40a, 40b and 40c may be configured to detect the amounts of emitted carbon dioxide, nitrogen oxides and sulphur oxides, respectively.

If sensor 40 issues detection signals at intervals, e.g., of one second, CPU 22 obtains the amounts of the respective harmful substances every one second. CPU 22 calculates total amounts of the respective harmful substances emitted over a predetermined period, and RAM 24 also stores the calculated total amounts as the emission amount data. This predetermined period is set, e.g., to one year in accordance with a manner of taxation, which will now be described.

According to the embodiment, the taxes are levied on the carbon dioxide, nitrogen oxides and sulphur oxides emitted from vehicles. For example, the amounts of emissions are divided into several ranges, and the amount of tax is determined depending on such ranges. The amount of tax may be proportional to the amount of emissions (i.e., tax = constant x (emission amount)). The taxation is determined depending on a yearly total amount of the emissions. The manner of calculating the amount of tax as well as the period, for which the tax assessment is performed, are determined to follow the laws in effect.

ROM (storing portion) 26 has stored tax information, which includes, e.g., relationships determined between the amounts of emissions and the amounts of taxes according to the laws in effect. CPU 22 operates as means for determining the amounts of taxes corresponding to the amounts of respective harmful substances in accordance with the tax information stored in ROM 26. CPU 22 determines the tax amount corresponding to the total emission amount stored in RAM 24, and stores the amount of tax (tax amount data) thus determined in RAM 24.

RAM 24 has also stored identification information (not shown) for identifying the owner of the vehicle. RAM 24 is powered, e.g., by a battery to hold the stored data even after the engine stopped. A nonvolatile memory such as a flash memory may be used as RAM 24 for holding the data.

Display interface 38 is connected to display device 42. CPU 22 sends the amount of tax stored in RAM 24 to display device 42 via display interface 38 for displaying it on display device 42. Display device 42 displays the amount of tax corresponding to the total emission amount up to that time.

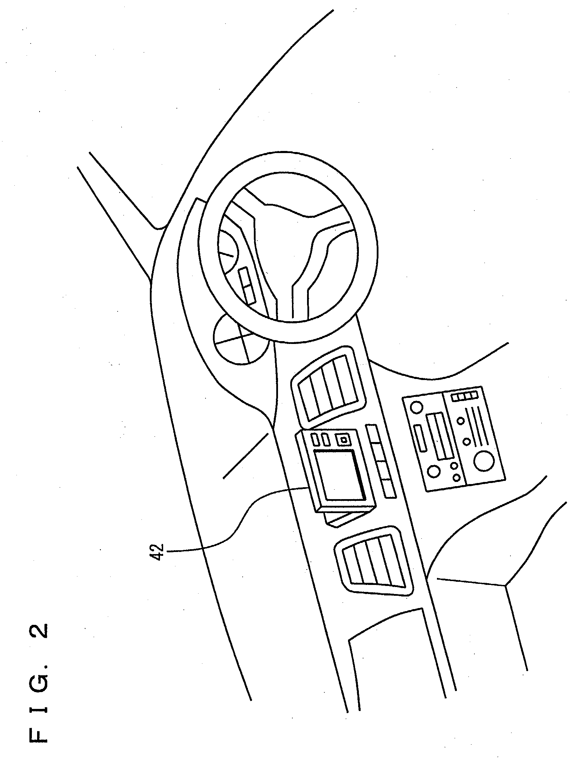

In addition to the amount of tax, the total amount of emissions may be displayed. Display device 42 is arranged, e.g., near a driver seat as shown in Fig. 2 so that the driver can view display device 42 during driving. Similarly to a car navigation system, voice or the like may be used to provide notification of the amount of tax and/or the total amount of emissions.

Communication unit 30 is connected, e.g., to a communication network 32 (e.g., the Internet) for controlling the communication with communication network 32. Communication network 32 is connected to a server 34 of authorities. Server 34 is operated by the authorities managing the taxation corresponding to the emission amounts of the foregoing harmful substances, and receives tax reports relating to the emission amounts of harmful substances. Communication unit 30 operates as means for sending the information relating to the detected amount of emissions. CPU 22 reads the amount of tax and the total amount of emissions, e.g., for one year (January - December) as well as the identification information for identifying the sender from RAM 24, and sends them to server 34 of the authorities through communication unit 30.

Based on the amount of tax, the total amount of emissions and the identification information identifying the sender, which are sent to server 34 of the authorities, the tax authorities perform the taxation procedures. The tax can be paid in a conventional manner such as transfer into a bank account or automatic deduction. Further, CPU 22 or the like may be used to send an instruction for tax payment to a server (not shown) operated by the corresponding bank through communication unit 30.

According to the above embodiment, communication unit 30 sends the amount of tax and the total amount of emissions to server 34 of the authorities. However, the system may be operated merely to display the amount of tax on display device 42 without performing the above sending. Also, only the total amount of emissions may be sent to server 34 of the authorities, and the amount of tax may be calculated on the authority side. The harmful substances detected by sensor 40 depend on the harmful substances, on which the tax is imposed.

### (Second Embodiment)

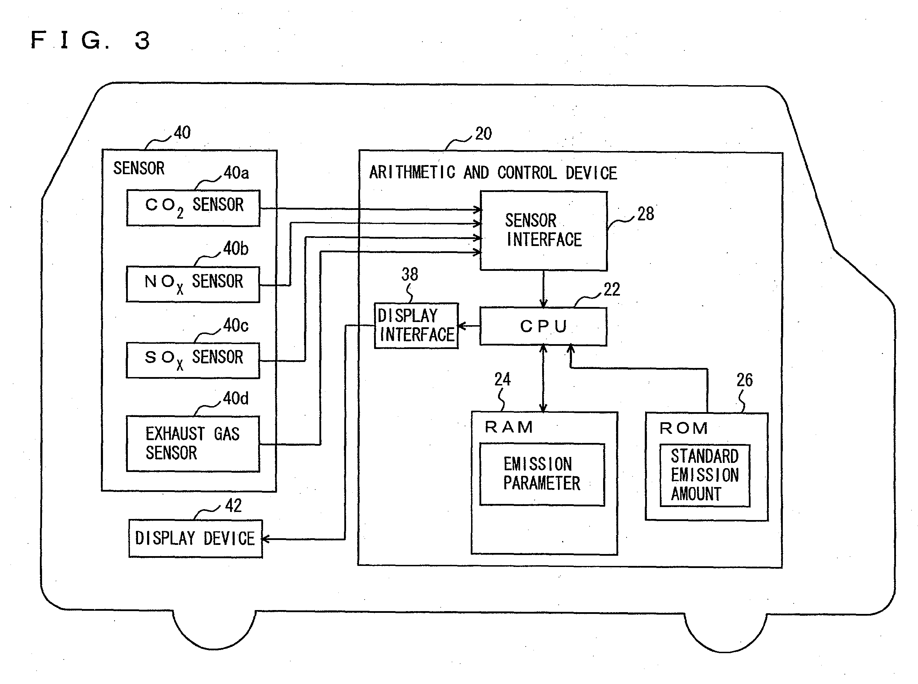

Fig. 3 illustrates an example of an emission amount notifying device according to a second embodiment. The emission amount notifying device includes sensor 40 and display device 42 similar to those of the first embodiment as well as arithmetic and control device 20 connected to sensor 40 and display device 42. Arithmetic and control device 20 includes CPU 22, sensor interface 28, RAM 24, ROM 26 and display interface 38 similar to those of the first embodiment.

ROM 26 has stored standard emission amounts of the carbon dioxide, nitrogen oxides and sulphur oxides, respectively. The standard emission amount is of a standard value, which corresponds to a drive time or duration, and is specified by automobile manufacturers or the like. In this embodiment, ROM 26 has stored the relationship between the drive time and the standard emission amount. Instead of the drive time, the standard emission amount may be determined based on the distance traveled.

CPU 22 operates as means for calculating the emission amount (emission parameter) corresponding to a difference between the amount of emissions detected by sensor 40 and the standard emission amount. CPU 22 detects insertion of an ignition key, and counts a time (drive time) elapsed after detection of the insertion. Similarly to the first embodiment, CPU 22 calculates the amount of emitted harmful substances, and stores it in RAM 24. Also, CPU 22 obtains the standard emission amount, which corresponds to the counted drive time, from the relationship between the drive time and the standard emission amount stored in ROM 26, and thereby calculates the emission parameter based on the standard emission amount thus obtained. The emission parameter is represented, e.g., by a percentage of the total emission amount with respect to the standard emission amount (i.e., (emission parameter) = ((total emission amount) - (standard emission amount)) x 100 ÷ (standard emission amount)). RAM 24 stores the emission parameter obtained by CPU 22.

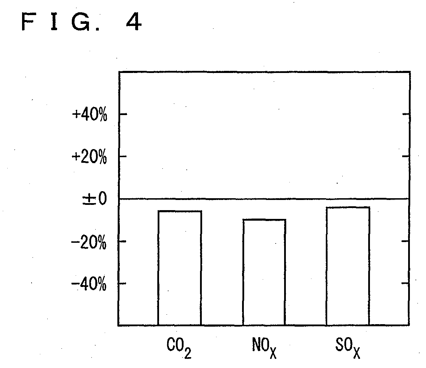

CPU 22 sends the information, which relates to the emission parameters stored in RAM 24, to display device 42 via display interface 38, and display device 42 displays the received information. Fig. 4 shows an example of a display screen. In the example shown in Fig. 4, a bar graph represents the emission parameters of the carbon dioxide (CO₂), nitrogen oxides (NOₓ) and sulphur oxides (SOₓ). CPU 22 prepares the bar graph shown in Fig. 4, and sends it to display device 42. Naturally, the system may be configured to display the emission parameters (numeric values) on display device 42.

### (Third Embodiment)

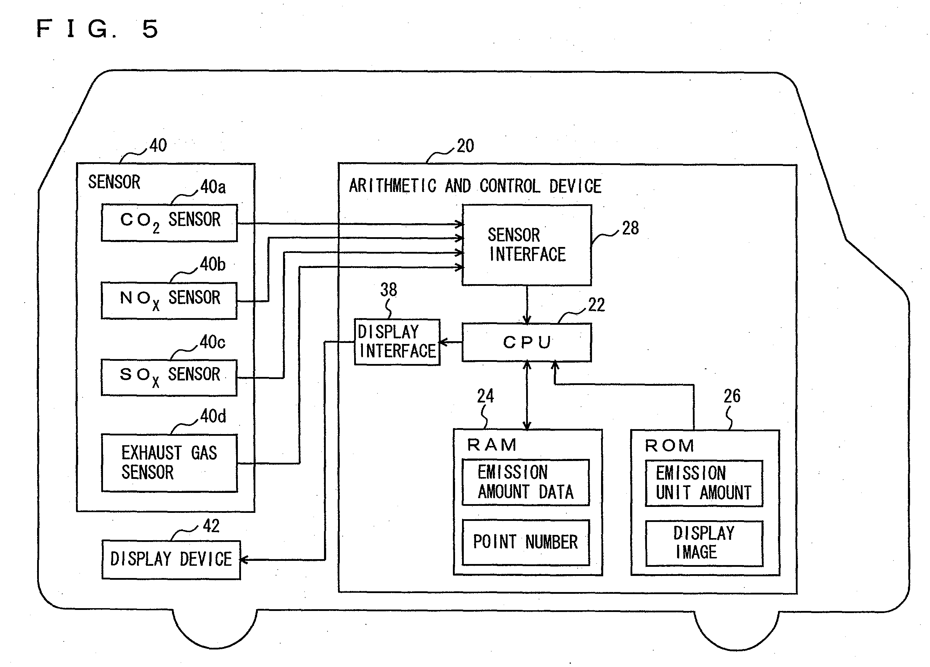

Fig. 5 shows another example of an emission amount notifying device according to the invention. Similarly to the second embodiment, the emission amount notifying device includes sensor 40, display device 42 and arithmetic and control device 20. ROM 26 of arithmetic and control device 20 has stored unit emission amounts of the carbon dioxide, nitrogen oxides and sulphur oxides, respectively. The unit emission amounts are based on the standard emission amounts per predetermined time, which are specified, e.g., by the automobile manufactures. In this example, ROM 26 has stored the unit emission amount equal to 1/2 of the standard amount of substances emitted during a drive time of one hour. Instead of the predetermined drive time, the unit emission value may be based on the standard amount of substances emitted corresponding to a predetermined distance traveled.

CPU 22 detects the insertion of the ignition key, and counts the time (drive time) elapsed from the insertion. CPU 22 calculates the emission amounts of the respective harmful substances similarly to the first embodiment, and calculates the emission amount per one hour for storing it in RAM 24. CPU 22 operates as means for converting the calculated emission amount to the number of unit(s), which will be referred to as a "point number" hereinafter. Based on the unit emission amount stored in ROM 26, CPU 22 converts the emission amount per one hour to the point number satisfying a relationship of ((point number) = (emission amount per one hour) ÷ (unit emission amount)), where the fractional portion of the number is dropped. RAM 24 stores the point number determined by CPU 22.

CPU 22 sends the information relating to the point number stored in RAM 24 to display device 42 through display interface 38, and display device 42 displays it. In this embodiment, ROM 26 has stored images to be displayed depending on the point number, and CPU 22 sends the image corresponding to the point number to display device 42 for displaying it. Further, the system may be configured to display the point number (numeric value) by display device 42.

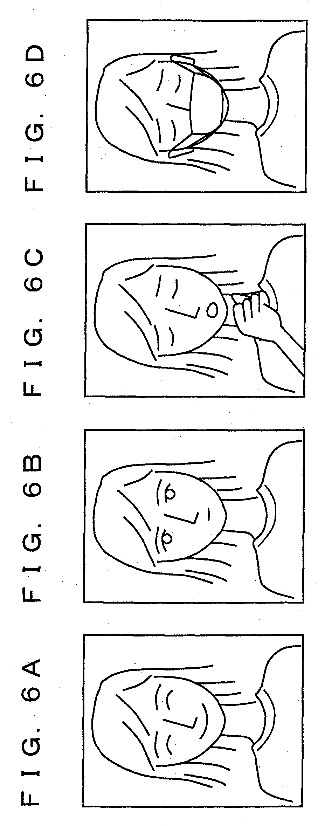

Examples of the displayed images are shown in Figs. 6A - 6D. Fig. 6A shows a smiling character, Fig. 6B shows an ordinary character, Fig. 6C shows a coughing character and Fig. 6D shows a character wearing a mask. When the point number is 0 (0 to 1/2 times larger than the standard amount), the image in Fig. 6A is displayed. When the point number is 1 (1/2 to 1 time larger than the standard amount), the image in Fig. 6B is displayed. When the point number is 2 (1 to 1.5 times larger than the standard amount), the image in Fig. 6C is displayed. When the point number is 3 (1.5 to 2 times larger than the standard amount), the image in Fig. 6D is displayed. Another appropriate image such as an image of a sky may be displayed, e.g., in blue when the point number is small, and may be displayed, e.g., in gray when the point number is large.

When such a taxation system becomes effective that a predetermined amount of tax is imposed corresponding to a predetermined emission amount, this predetermined emission amount may correspond to one point, and display device 42 may display the number of points or the amount of tax.

According to the second or third embodiments, ROM 26 stores the standard emission amount and the unit emission amount. However, signals corresponding to the standard emission amount and the unit emission amount can be provided to CPU 22. For example, a predetermined voltage supplied to arithmetic and control device 20 may be controlled by an element such as a resistance, and thereby a voltage signal corresponding to the standard emission amount or the unit emission amount is provided to CPU 22.

According to the invention, converting means converts the detected emission amount to the number of units such as a point number for notification. When the emission amount is large, therefore, the driver can easily understand it from a small point number, as compared with the manner of merely displaying the emission amount. By displaying the number ofunit(s), it is possible to enhance the driver's understanding and interest to the emission amount so that the environmental protection can be promoted.

Further, the calculating means calculates the emission value corresponding to the difference between the detected emission value and the standard value, and provides the notification of it. As compared with the manner of merely displaying the emission amount, therefore, the driver can easily understand whether the emission amount is larger or smaller than the standard value. By displaying the emission amount with reference to the standard value, it is possible to enhance driver's understanding and interest to the emission amount of harmful substances so that the environmental protection can be promoted.

If taxation is conducted in accordance with the amount of predetermined substances emitted from the vehicles, the storing portion can store the amounts of taxes corresponding to the emission amounts so that obtaining means can obtain the amount of tax corresponding to the detected emission amount from the storing portion, and can provide the notification of it. By displaying the amount of tax, it is possible to enhance the driver's understanding and interest to the emission amount so that the environmental protection can be promoted.

The display means displays the emission amounts of harmful substances detected by the detecting means so that the driver can visually determine the amount of emissions.

The system detects the emission amounts of the harmful substances including the carbon dioxide, nitrogen oxides and sulphur oxides, and provides the notification of them. Therefore, it is possible to provide the notification of the emission amounts of predetermined substances, which are contained in the exhaust gas of the vehicle and are harmful to the environment.

If the taxation is conducted in accordance with the amount of predetermined substances emitted from the vehicles, information related to the detected emission amount is sent to the server operated by the tax authorities so that the tax payment procedures can be rapidly and easily performed.

### (Fourth Embodiment)

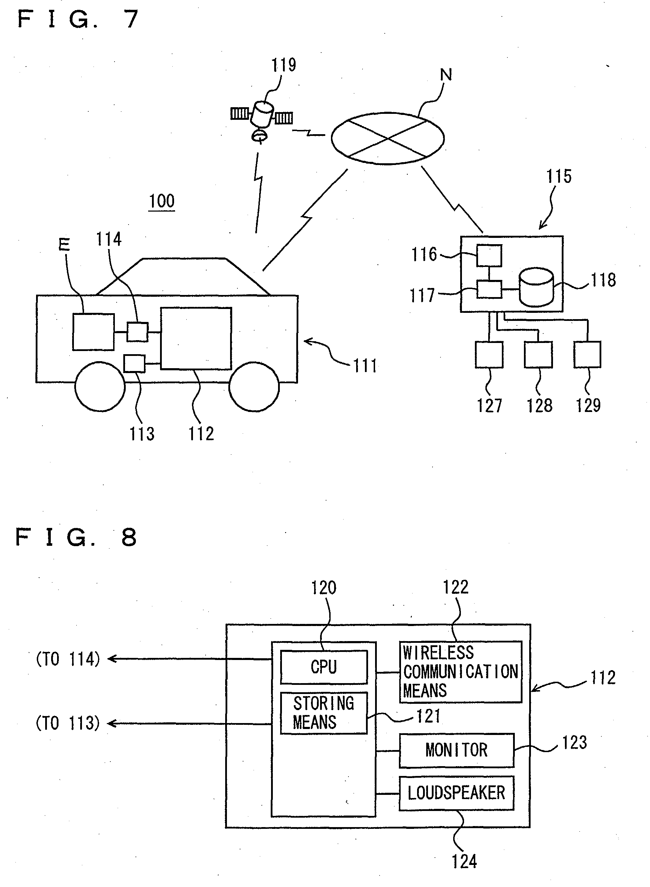

As illustrated in Fig. 7, an emission charging system 100 for vehicles has a communication network N connecting a vehicle 111 to a management unit 115.

Vehicle 111 includes a main device 112, an engine speed sensor (engine operation state detecting means) 114 connected to an engine E for detecting an engine speed, and a vehicle-speed sensor (run/stop detecting means) 113, and also includes means for communication with GPS satellites 119.

As illustrated in Fig. 8, main device 112 includes a CPU (Central Processing Unit) 120, storing means 121, wireless communication means 122 serving as an interface for communication network N, a monitor (display means) 123 and a loudspeaker (sound means) 124.

Management unit 115 includes communication means 116 serving as an interface to communication network N, arithmetic means 117 and database 118, and is connected to a bank 127, a credit card company 128 and a weather information center 129 over the network. Database 118 has stored a vehicle ID of each vehicle 111, manager information corresponding to each vehicle ID, an engine displacement corresponding to the vehicle ID and a temperature-calculation charging table, which will be described later.

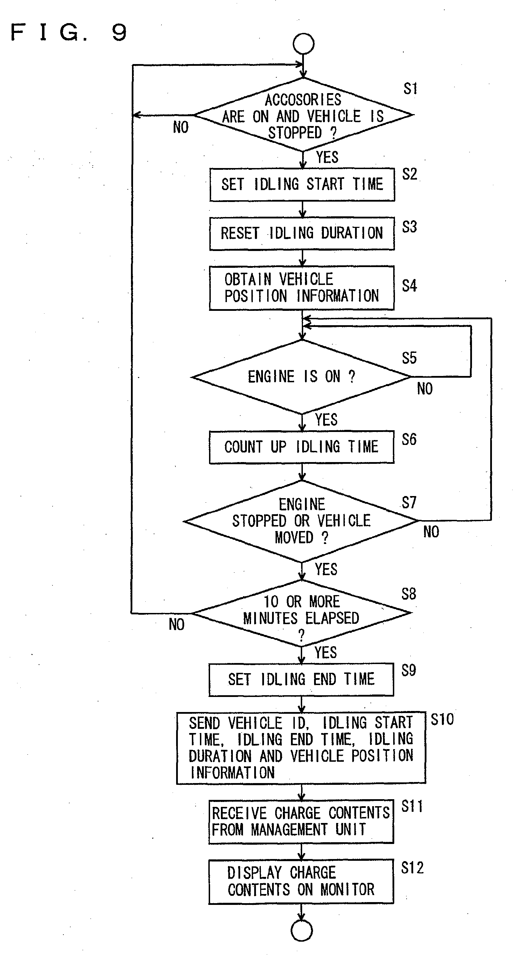

Then, processing procedures on the side of vehicle 111 will be described with reference to Fig. 9.

When accessories of vehicle 111 are on in accordance with the position of the ignition key, and vehicle speed sensor 113 detects the stop state of vehicle 111 to provide vehicle-stop information (S1), an idling vehicle-stop start time is set in storing means 121 of main device 112 (S2), and an idling vehicle-stop duration is reset to zero (S3). Vehicle position information is obtained by communication with GPS satellites 119 (S4).

When engine speed sensor 114 detects the driving state of engine E to provide engine drive information (S5), the idling duration is counted up (S6). When engine speed sensor 114 detects the stop state of engine E, or vehicle speed sensor 113 detects movement (running) of vehicle 111, it is determined whether the idling duration, which has been counted up to that time, is shorter than 10 minutes or not (S8).

If the idling duration is shorter than 10 minutes, it is deemed that the idling was performed due to a traffic jam, traffic light or the like so that no charge is imposed, and a loop restarts. If the idling duration is equal to or longer than 10 minutes, it is determined that wasteful idling was performed, and an idling end time is set (S9).

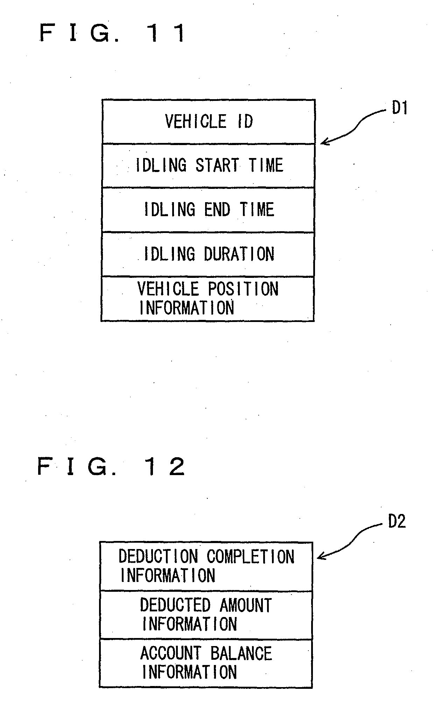

As illustrated in Fig. 11, packet data D1 having the vehicle ID, idling start time, idling end time, idling duration and vehicle position information is sent to management unit 115 from wireless communication means 122 of main device 112 over communication network N (S10).

Management unit 115, which received packet data D1, performs the charging procedures as will be described later, and sends contents of the charge over communication network N to vehicle 111 (S11). Vehicle 111 can display the received contents of charge on monitor 123 to notify the driver of the amount of charge.

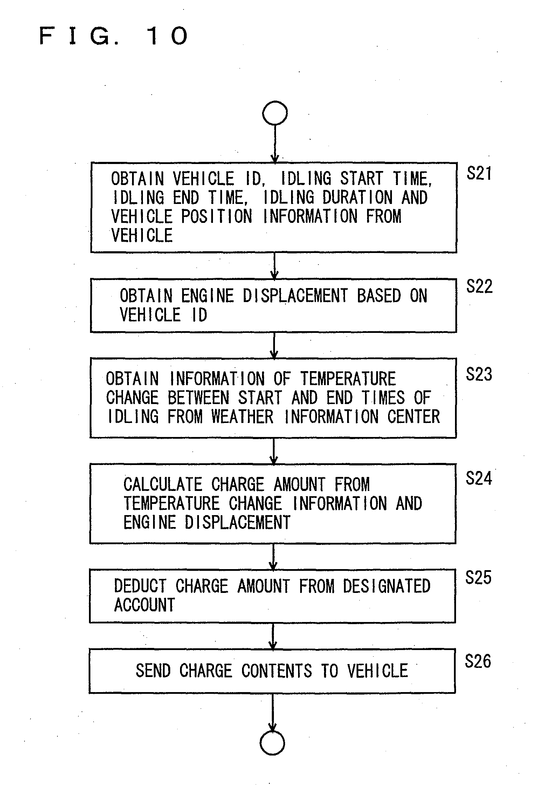

Then, the processing procedures in management unit 115 will be described with reference to Fig. 10.

Communication means 116 receives packet data D1 from vehicle 111 over communication network N so that management unit 115 obtains the vehicle ID, idling start time, idling end time, idling duration and vehicle position information (S21).

Based on the vehicle ID thus obtained, the engine displacement of target vehicle 111 is obtained from database 118 (S22). Then, management unit 115 accesses the local temperature information in weather information center 129, and obtains information about the change in temperature, which occurred between the idling start time and the idling end time at the position of the vehicle obtained from the received vehicle position information (S23).

Based on the temperature-calculation charge table of a table 1 (i.e., table of amounts of charges per one minute for respective displacement classes), which is stored in database 118, the amount of charge is calculated from the temperature-change information thus obtained and the engine displacement (S24). For example, an amount of 50 yen per minute is charged to a truck having an engine displacement of 4000 cc when the ambient temperature was 9°C. When the temperature changed to 11°C during the idling, 55 yen per minute is charged. If the idling was performed for a long time, the amount of charge can be determined in accordance with the temperature change during the idling. By giving consideration to the ambient temperatures at the position of vehicle 111, the amounts of charges can be fairly determined for all the vehicles located in various locations of completely different temperature conditions such as Okinawa, Hokkaido and a highland in Japan.

**Table 1**

| Amounts (Yen) of Charges per Minute for Engine Displacement Classes (and Temperature Ranges) | | | | | | | | | |
|---|---|---|---|---|---|---|---|---|---|
| | - 0°C | 0 - 5°C | 5 - 10°C | 10 - 15°C | 15 - 20°C | 20 - 25°C | 25 - 30°C | 30 - 35°C | 35°C - |
| - 999cc | 10 yen | 15 yen | 20 yen | 25 yen | 30 yen | 25 yen | 20 yen | 15 yen | 10 yen |
| 1000 - 1999cc | 20 yen | 25 yen | 30 yen | 35 yen | 40 yen | 35 yen | 30 yen | 25 yen | 20 yen |
| 2000 - 3999cc | 30 yen | 35 yen | 40 yen | 45 yen | 50 yen | 45 yen | 40 yen | 35 yen | 30 yen |
| 4000 - 7999cc - | 40 yen | 45 yen | 50 yen | 55 yen | 60 yen | 55 yen | 50 yen | 45 yen | 40 yen |
| 8000cc - | 50 yen | 55 yen | 60 yen | 65 yen | 70 yen | 65 yen | 60 yen | 55 yen | 50 yen |

Then, the amount of charges thus calculated is deducted from an account (i.e., account of bank 127 or credit card company 128) designated by the vehicle manager corresponding to the vehicle ID thus received (S25). The charge may be deducted from the personal account as described above, and alternatively may be deducted from a dedicated account, which is opened in advance for receiving the charge prepaid by the manager of vehicle 111.

As illustrated in Fig. 12, packet data D2 including deduction information, which relates to whether the deduction was performed or not, as well as information of deducted amount and balance information of account is sent to vehicle 111 over communication means 116 and communication network N (S26).

On vehicle 111, monitor 123 displays contents of the received data. In this operation, the system may be configured to display the amount of deducted charge on monitor 123, and to display additionally the balance of account for requesting addition of the money to the account. The above contents of charge may be announced via loudspeaker 124. By notifying the driver of the amount of charge, it is possible to promote stop of unnecessary idling and to enhance the environmental awareness.

When it is determined that a failure has occurred in at least one of the devices on vehicle 111 such as main device 112, engine operation state detecting device 114 and vehicle speed sensor 113, it is desired to notify the driver of the failure via monitor 123 or loudspeaker 124.

When communication with wireless communication means 122 of vehicle 111 is impossible, for example, due to the outside of the communication area, this situation is not determined as a failure, and sending of data is retried by a retry function provided in the system. The elapsing of a predetermined time or the running of a predetermined distance can trigger the retry.

The amount of charge per minute may be determined without depending on the ambient temperature information but depending on the season as illustrated in a table 2. More specifically, the amounts of charges may be increased in April, May, October and November, in which people can comfortable without operating an air conditioner, and the amounts of charges may be decreased in the very cold season and midsummer, i.e., in January, February, July and August. Intermediate amounts of charges are determined in March, June, September and December.

**Table 2**

| Amounts (Yen) of Charges per Minute for Engine Displacement Classes (Monthly) | | | | | | | | |
|---|---|---|---|---|---|---|---|---|
| 999 | Jan, Feb | Mar | Apl, May | Jun | Jul, Aug | Sep | Oct, Nov | Dec |
| - 1000cc | 10 yen | 20 yen | 30 yen | 20 yen | 10 yen | 20 yen | 30 yen | 20 yen |
| 1000 - 1999cc | 20 yen | 30 yen | 40 yen | 30 yen | 20 yen | 30 yen | 40 yen | 30 yen |
| 2000 - 3999cc | 30 yen | 40 yen | 50 yen | 40 yen | 30 yen | 40 yen | 50 yen | 40 yen |
| 4000 - 7999cc | 40 yen | 50 yen | 60 yen | 50 yen | 40 yen | 50 yen | 60 yen | 50 yen |
| 8000cc - | 50 yen | 60 yen | 70 yen | 60 yen | 50 yen | 60 yen | 70 yen | 60 yen |

According to the above structure, since the manager of each vehicle 111 is individually charged corresponding to the amount of the emissions of each vehicle, fair charging can be performed without causing unfairness, which may be caused by uniform charging. Also, the system can make the vehicle driver aware of the necessity to reduce the wasteful idling time, which contributes to reduction of fuel consumption, reduction of CO₂ emission and economic transportation.

Some of so-called hybrid cars can stop engines while operating air conditioners. In such cars, the engine does not start until a battery becomes weak, and the engine automatically starts to charge the battery when the battery becomes weak. When the battery is sufficiently charged, the engine automatically stops. These operations are repeated.

In these hybrid cars, when the driver operated only the air conditioner without turning off the accessories, only the total engine operation time (idling time) during the stop of the vehicle is sent to management unit 115 so that emission charging system 100 imposes only small amounts of charges. This can promote spread of the hybrid cars, and thus contributes to improvement of the global environment.

Although vehicle speed sensor 113 is used for detecting the stop state of vehicle 111, this detection may be performed based on absolute position coordinates of vehicle 111 detected by the GPS (Global Positioning System)

### (Fifth Embodiment)

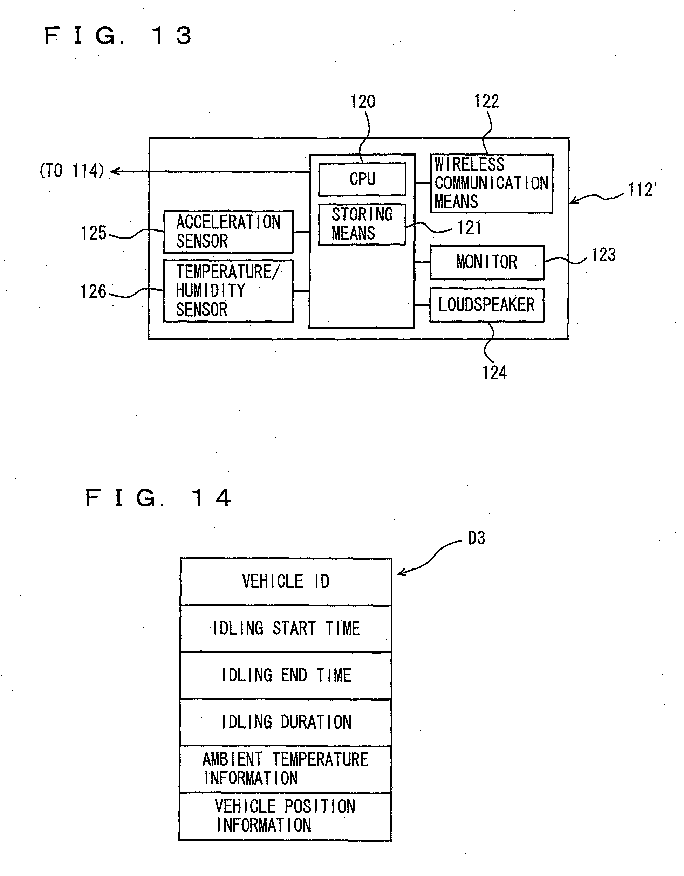

Fig. 13 illustrates a fifth embodiment. This embodiment differs from the fourth embodiment in that a main device 112' includes an acceleration sensor 125 and a temperature sensor 126.

When the vehicle is running, vibrations necessarily occur due to irregularities on a road and others. Therefore, when vibration information provided from acceleration sensor 125 represents vibrations of a predetermined magnitude or more, it is determined that the vehicle is running. When the vibration information represents vibrations lower than the predetermined magnitude, it is determined that the vehicle is not running. In this manner, the vehicle-stop state can be determined without using the speed sensor.

If the vehicle speed sensor is employed, it is arranged on or around a wheel or the like. Therefore, it is necessary to transmit a sensor signal to wireless communication means 122, which is an interface to communication network N, via a connection cable. However, acceleration sensor 125 can be employed without restrictions on its position, and therefore can be arranged inside main device 112' having wireless communication means 122.

Accordingly, the system can eliminate the connection cable, connection interface and attaching operations so that the structures on the vehicle side can be simple and inexpensive.

Further, temperature sensor (temperature detecting means) 126 detects the ambient temperature at the position of vehicle 111, and adds it to packet data D3 to be sent from vehicle 111 to management unit 115. As illustrated in Fig. 14, packet data D3 has the vehicle ID, idling start time, idling end time, idling duration, ambient terminal information and vehicle position information.

By obtaining the ambient temperature information from vehicle 111, it is not necessary to contact weather information center 129 for inquiring about the ambient temperature at the location of vehicle 111 based on the vehicle position information obtained from the GPS (Global Positioning System).

Instead of temperature sensor 126, a temperature/humidity sensor may be used so that ambient humidity information may be added to the information sent to management unit 115 for using it in the charging conditions.

According to the invention, as described above, the charging can be fairly performed according to the amounts of emissions of the vehicle, and it is possible to make the drivers aware of necessity of minimizing the emissions. This contributes to reduction of fuel consumption, reduction of CO₂ emission and economic transportation. By imposing the charges only for the idling state, in which the vehicle is emitting the exhaust gas without running, reduction of wasteful emissions and reduction of fuel consumption can be effectively performed.

### (Sixth Embodiment)

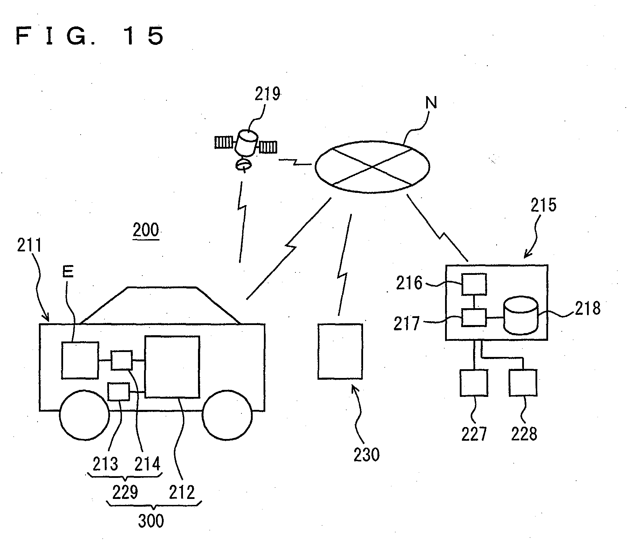

As illustrated in Fig. 15, an emission charging system 200 for a vehicle includes a vehicle 211, a management unit 215 and an inspection device 230 connected together by communication network N.

Vehicle 211 is provided with a vehicle-mounted device 300, which is formed of a main device 212, an engine speed sensor (engine operation state detecting means) 214 connected to engine E for detecting an engine speed and a vehicle speed sensor (run/stop detecting means) 213. Engine speed sensor 214 and vehicle speed sensor 213 form idling detecting means 229.

Management unit 215 includes communication means 216 serving as an interface to communication network N, arithmetic means 217 and database 218, and is connected to a bank 227 and a credit card company 228. Database 218 has stored a vehicle license number of each vehicle 211, a vehicle-mounted device ID peculiar to each main device 212, a manager corresponding to the vehicle license number (and vehicle-mounted device ID), an engine displacement corresponding to the vehicle license number (and vehicle-mounted device ID) and a connection ID for communication corresponding to the vehicle-mounted device ID.

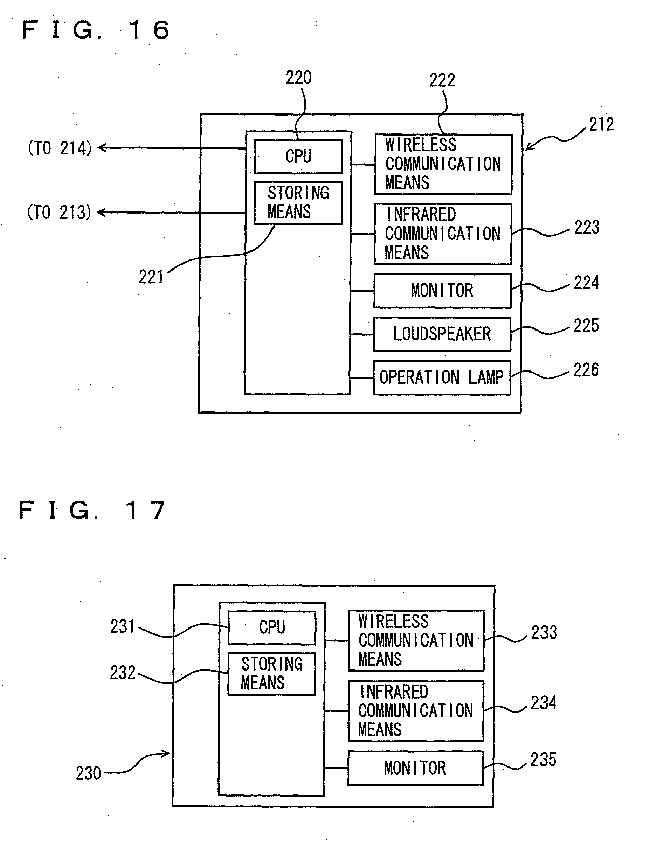

As illustrated in Fig. 16, main device 212 includes a CPU (Central Processing Unit) 220, storing means 221, wireless communication means 222 serving as an interface to communication network N, infrared communication means (short-range communication means) 223 for infrared communication with inspection device 230, a monitor (display means) 224, a loudspeaker 225 and an operation lamp 226 notifying of normal/abnormal states of main device 212. It is preferable to use the cellular phone network for wireless communication by wireless communication means 222.

As illustrated in Fig. 17, inspection device 230 includes a CPU (central Processing Unit) 231, a storage device 232, wireless communication means 233 serving as an interface to communication network N, infrared communication means 234 used for the infrared communication with main device 212, and a monitor 235.

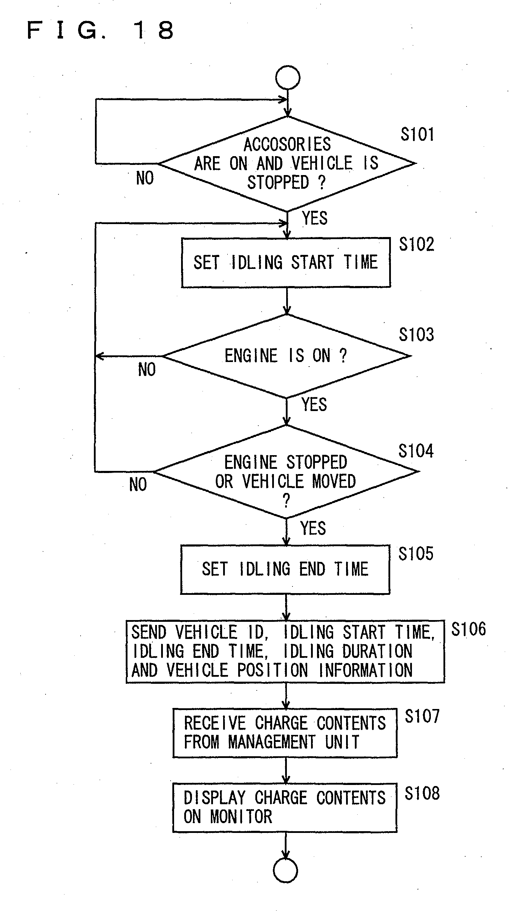

Then, procedures on the side of vehicle 211 will be described with reference to Fig. 18.

When accessories of vehicle 211 are on in accordance with the position of the ignition key, and vehicle speed sensor 213 detects the stop state of vehicle 211 to provide vehicle-stop information (S101), the idling start time is set in storing means 221 of main device 212 (S102). When engine speed sensor 214 provides the engine drive information representing the driving state of engine E (S103), it is determined that engine E is in the idling state. When engine speed sensor 214 detects the stop state of engine E, or when vehicle speed sensor 213 detects the moving (running) of vehicle 211 (S104), the idling end time is set (S105).

The packet data having the vehicle-mounted device ID, idling start time and idling end time is sent to management unit 215 over wireless communication means 222 and communication network N (S106).

Management unit 215, which received the packet data, performs predetermined charging procedures, which will be described later, and sends contents of the charge over communication network N to vehicle 211 (S107). Vehicle 211 displays the received contents of charge on monitor 224 (S108), and notifies the vehicle driver of the amount of charge.

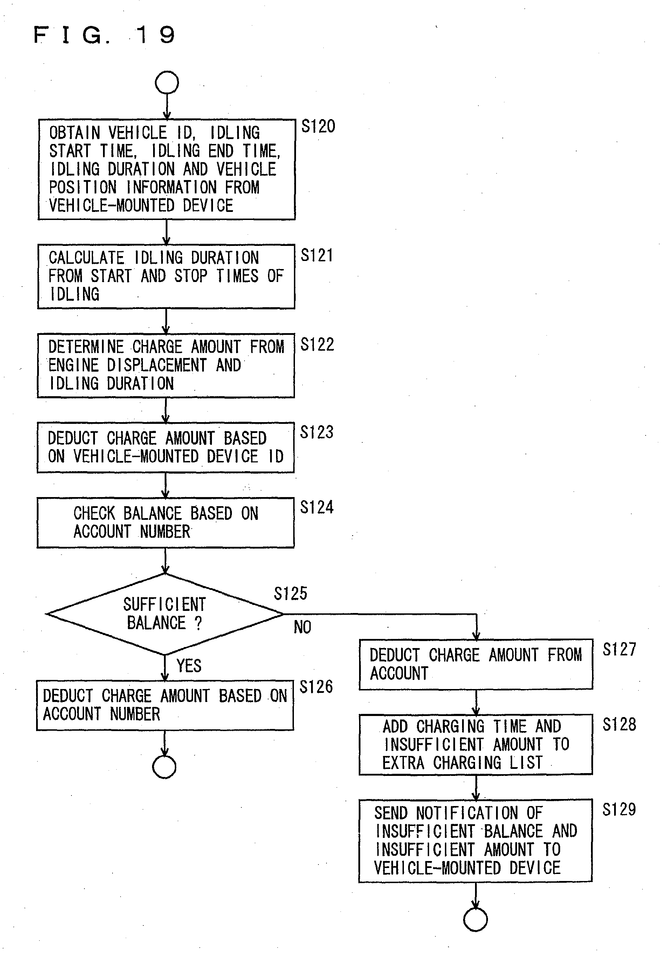

Then, processing procedures performed in charging unit 215 will be described with reference to Fig. 19.

Communication means 216 receives the packet data from main device 212 over communication network N, and management unit 215 obtains the vehicle-mounted device ID, idling start time and idling end time (S120).

Charging unit 215 calculates the idling duration from the idling start time and idling end time thus obtained (S121), and determines the amount of charge corresponding to the idling duration in view of the engine displacement of vehicle 211, which is obtained from database 218 based on the obtained vehicle-mounted device ID (S122). Thus, a larger amount of charge is imposed on a truck of a large engine displacement as compared with a car of a small engine displacement if the idling durations of them are equal to each other.

Charging unit 215 obtains the account number of the vehicle manager for deducting the charge from bank 227 or credit card company 228 according to the vehicle-mounted device ID (S123), and determines the balance of the account of the obtained account number (S124). When the balance is larger than the amount of charge, the charge is deducted from this account (S126). If the balance is smaller than the charge, only an allowed amount is deducted (S127), and an insufficient amount and the time of deduction are added to an extra charge list in database 218 (S128). Packet data notifying of the insufficient balance and the insufficient amount is sent to main device 212 over communication network N (S129).

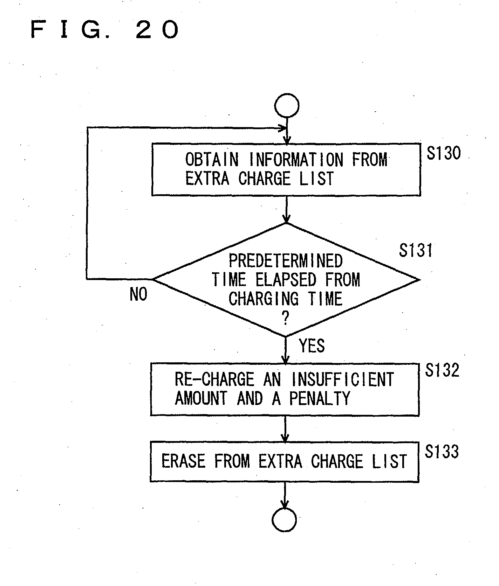

When management unit 215 periodically performs batch processing for recharging when the amount of charge could not be fully deducted due to the insufficient balance. More specifically, as illustrated in Fig. 20, management unit 215 refers to the extra charge list in database 218 (S130), and retrieves the cases, in which a predetermined time elapsed after the time of deduction (S131). Before the predetermined time elapsed, money was probably added to the account. Therefore, the deduction processing is attempted again to deduct a sum of the amounts including an insufficient amount and an extra amount (S132). If the sum can be deducted, this case is erased from the extra charge list (S133). If the deduction is still impossible due to the insufficient balance, this case is not erased from the extra charge list.

Description will now be given on procedures of checking the normal operation of main device 212 by inspection device 230.

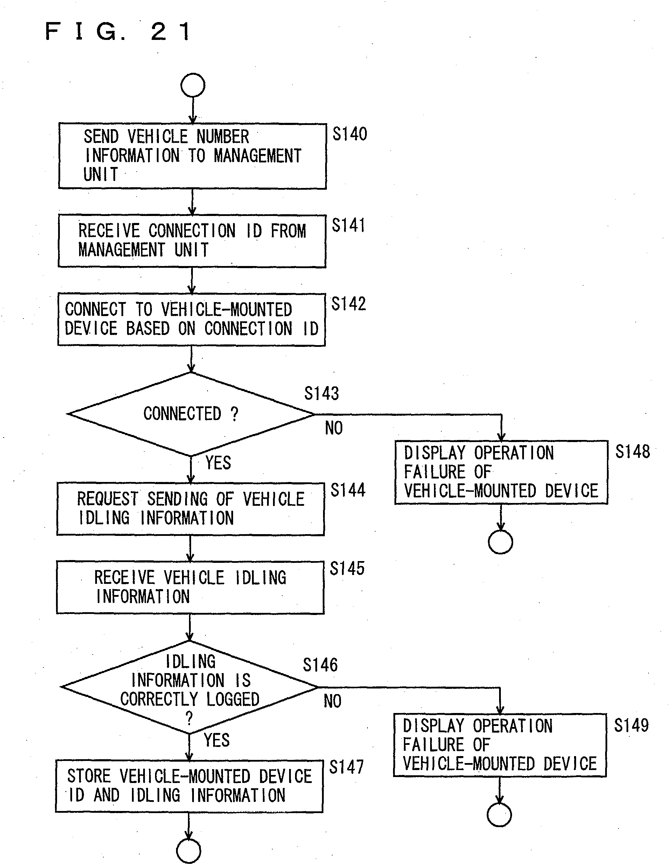

Processing in inspection device 230 will now be described with reference to Fig. 21.

A police officer or the like patrolling a public road carries inspection device 230. For inquiring about the connection ID required for communication with main device 212, the officer reads a number on the license plate of vehicle 211, and sends the license number information from inspection device 230 to management unit 215 over wireless communication means 233 and communication network N (S140). From management unit 215, inspection device 230 receives the connection ID for establishing the communication with main device 212 corresponding to the vehicle license number (S141), and operates to establish the communication with main device 212 over communication network N by using the connection ID (S142).

If the communication with main device 212 is not established (NO in S143), inspection device 230 displays on monitor 235 that main device 212 has a trouble (S148). In some cases, wireless communication means 222 of main device 212 is outside the communication area. In such cases, operation lamp 226 on main device 212, which is arranged in a position visible to a person outside vehicle 211, represents that it is outside the communication area. This can prevent erroneous determination that an abnormal operation occurred in main device 212. For the operation of sending the idling information from main device 212 to management unit 215, it is preferable to employ a retry function, which repeats the operation of sending the data until main device 212 enters the communication area.

Inspection device 230 may employ another manner for determining whether main device 212 is outside the communication area or not. For example, a police officer may determine whether it is outside the communication area or not, by using a device similar to wireless communication means 222 of main device 212.

When the connection is established (YES in S143), a request for the idling information (idling start time and idling end time) and the vehicle-mounted device ID of vehicle 211 is sent (S144).

The idling information is received from main device 212 over communication network N and wireless communication means 233 (S145). If the idling information has not been normally logged, inspection device 230 displays on the monitor to the effect that an abnormal operation occurred in main device 212 (S149). When the idling information has been normally logged, the vehicle-mounted device ID and the idling information are stored in storing means 232.

The information, which relates to the plurality of vehicles and is stored in storing means 232 as described above, will be collectively sent to management unit 215 for checking whether the charging is performed normally or not. Thereby, such an illegal action can be exposed that a driver turns off main device 212 to stop illegally the sending of idling information to management unit 215 when the driver stops the idling stop state. When the above illegal action is exposed, penalties such as a fine and/or reduction of license points are imposed similarly to the case of violation of traffic regulations.

Such a situation that inspection device 230 detects an abnormal operation in main device 212 (S148, S149) may occur not for the reason that the vehicle manager intentionally and illegally turns off main device 212, but may occur merely due to a failure. In the case of the failure, it may be impossible to repair or replace main device 212 immediately. Therefore, the system may be configured as follows. Only in the case of failure, therefore, the vehicle manager can send the notification of the failure over the telephone, the Internet or the like so that a certain grace period for charging may be granted. Inspection device 230 can recognize the foregoing grace period by communication with management unit 215.

Specific description will now be given on the determination whether the idling information is normally logged or not. In practice, management unit 215 executes this determination. First, description will be given on the processing of managing unit 215. As already described with reference to Fig. 19, management unit 215 records, as log information, the vehicle-mounted device ID, idling start time, idling end time and amount of charge in database 218. In the description, to log means to record the log information in database 218.

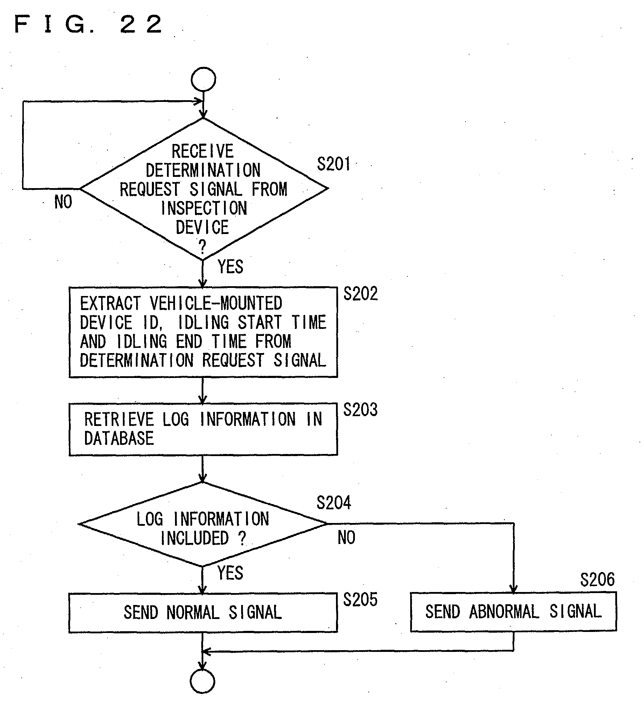

Fig. 22 is a flowchart illustrating a flow of determination processing executed by management unit 215. Referring to Fig. 22, it is determined whether the determination request signal is received from inspection device 230 or not (S201). If received, an interrupt is performed, and an operation moves to a step S202. If not, management unit 215 enters a standby state (NO in S202). The determination request signal sent from inspection device 230 includes the vehicle-mounted device ID, idling start time and idling end time. The vehicle-mounted device ID may be a vehicle ID, and preferably a vehicle license number.

In step S202, the vehicle-mounted device ID, idling start time and idling end time are extracted from the received determination request signal. The log information is retrieved from database 218 (S203), and it is determined whether the extracted vehicle-mounted device ID, idling start time and idling end time are stored as the log information or not (S204). When it is determined that the above data is stored, the operation moves to a step S205, and otherwise moves to a step S206.

In step S205, a normal signal representing the fact that the above data is stored as the log information is sent to inspection device 230. In step S205, an abnormal signal representing the fact that the above data is not stored as the log information is sent to inspection device 230.

As described above, management unit 215 stores the vehicle-mounted device ID, idling start time, idling end time and amount of charge, which are sent from vehicle-mounted device 212, as the log information in database 218 upon every reception thereof. Therefore, the determination processing executed by management unit 215 is the processing of determining whether the vehicle-mounted device ID, idling start time, idling end time and the amount of charge are sent from vehicle-mounted device 212 or not, by using the vehicle-mounted device ID, idling start time and idling end time sent from inspection device 230. Thus, management unit 215 determines that the sending is already performed when database 218 has stored the vehicle-mounted device ID, idling start time, idling end time and amount of charge corresponding to the vehicle-mounted device ID, idling start time and idling end time sent from inspection device 230.

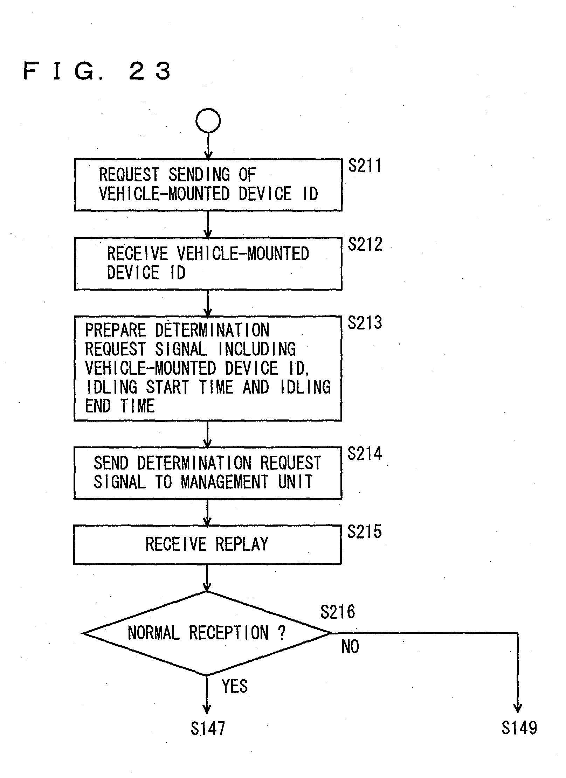

Then, the determination processing executed by inspection device 230 will be described with reference to Fig. 23. This determination processing is executed in a step S146 illustrated in Fig. 21. Referring to Fig. 23, inspection device 230 request vehicle-mounted device 212 to send the vehicle-mounted device ID (S211). When vehicle-mounted device 212 receives this request, it sends the vehicle-mounted device ID assigned thereto to inspection device 230. Inspection device 230 receives the vehicle-mounted device ID thus sent (S212).

Inspection device 230 prepares a determination request signal (S213). The determination request signal is a signal requesting management unit 215 to execute the determination processing, and includes the idling information (idling start time and idling end time) received in step S 145 illustrated in Fig. 21 as well as the vehicle-mounted device ID received in step S212. Inspection device 230 sends the determination request signal thus prepared to management unit 215 (S214). When management unit 215 receives the determination request signal from inspection device 230, it executes the determination processing already described with reference to Fig. 22, and sends the normal signal or abnormal signal to inspection device 230. Inspection device 230 receives the normal signal or abnormal signal (S215), and determines whether the received signal is the normal signal or not (S216). When it is determined that the normal signal is received, the operation moves to a step S147 (see Fig. 21), and otherwise moves to a step S149 (see Fig. 21).

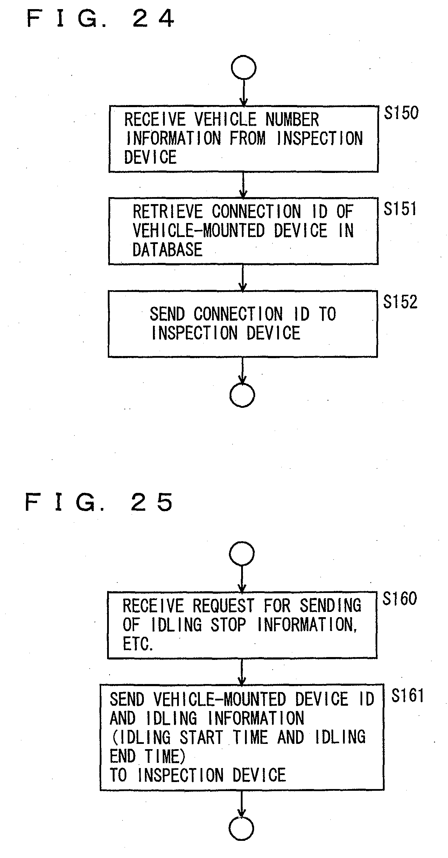

The processing in management unit 215 will now be described with reference to Fig. 24.

Management unit 215 receives the vehicle number information from inspection device 230 over communication network N (S150), retrieves the connection ID for establishing the communication with main device 212 from database 218 (S151), and sends the connection ID thus retrieved to inspection device 230 over communication network N (S152).

Processing in main device 212 will now be described with reference to Fig. 25.

Main device 212 receives the send request for the idling information (idling start time and idling end time) and the vehicle-mounted device ID from inspection device 230 over communication network N (S160), and sends the idling information (idling start time and idling end time) and the vehicle-mounted device ID to inspection device 230 in response to the request (S161).

Description will now be given on the case where infrared communication is used when inspection device 230 checks the operation of main device 212.

As illustrated in Fig. 26, inspection device 230 does not send an inquiry to management unit 215 over communication network N. Inspection device 230 is arranged near vehicle 211, and checks the normal operation of main device 212 by directly performing the infrared communication between its infrared communication means 234 and infrared communication means 224 of main device 212.

As described above, inspection device 230 located near vehicle 211 directly performs the short-range communication with main device 212, and thus does not use communication network N and management unit 215 so that the communication cost can be low, and the communication can be reliably ensured without causing such a situation that the device is outside the communication area, provided that the device is located within a predetermined distance. Since the infrared communication allows only short-range communication with high directivity, it is possible to prevent crosstalk with a vehicle-mounted device of another vehicle in the neighborhood, and the device cost can be low.

In addition to the infrared communication described above, wireless LAN, Bluetooth, UWB (Ultra-Wide Band) or the like may be preferably used for the short-range wireless communication. Even when these are used, the communication contents are similar to those in the foregoing case using network N, and therefore, description thereof will not be repeated.

Although the vehicle-stop state of vehicle 211 is detected by speed sensor 13, the vehicle-stop state of vehicle 211 may be detected based on absolute position coordinates of vehicle 211 detected by GPS (Global Positioning System) satellite 19.

When the vehicle is running, vibrations necessarily occur due to irregularities on a road and others. Therefore, when vibration information provided from the acceleration sensor represents vibrations of a predetermined magnitude or more, it is determined that the vehicle is running. When the vibration information represents vibrations lower than the predetermined magnitude, it is determined that the vehicle is not running. In this manner; the vehicle-stop state can be determined without using the speed sensor. The acceleration sensor can be substantially arranged at any position, and can be arranged within main device 212. Therefore, the connection cable and connection interface can be eliminated, and the whole structure on the vehicle can be simple and inexpensive.

According to the invention, as described above, the charges can be automatically imposed on the idling states, and it is possible to make the vehicle drivers aware of necessity of stopping unnecessary idling, and thus to contribute to reduction in emissions of CO₂ and pollution substances as well as reduction of current consumption. By using the inspection device described above, it is possible to check the normal operation of the vehicle-mounted device detecting the idling state of the vehicle. Therefore, it is possible to expose the escape from the charging, which is attempted by illegally turning off the vehicle-mounted device, and to discover a failure of the vehicle-mounted device or the like.

## Claims

1. An emission amount notifying device comprising:
detecting means (40) for detecting an emission amount of a predetermined substance emitted from a vehicle;
converting means (22) for converting the emission amount detected by the detecting means to a number of unit(s); and
notifying means (42) for notifying of the number of unit(s) obtained by the conversion.

2. An emission amount notifying device comprising:
detecting means (40) for detecting an emission amount of a predetermined substance emitted from a vehicle;
calculating means (22) for calculating the emission amount corresponding to a difference between the emission amount detected by the detecting means and a standard value; and
notifying means (42) for notifying of the calculated emission value.

3. An emission amount notifying device comprising:
detecting means (40) for detecting an emission amount of a predetermined substance emitted from a vehicle;
storing portion (26) for storing an amount of money corresponding, in advance, to the emission amount;
obtaining means (22) for obtaining from the storing portion the amount of money corresponding to the emission amount detected by the detecting means; and
notifying means (42) for notifying of the obtained amount of money.

4. The emission amount notifying device according to claim 1, 2 or 3, wherein said notifying means includes a display device (42).

5. The emission amount notifying device according to claim 1, 2 or 3, wherein
said predetermined substance includes one or more of a carbon dioxide, nitrogen oxides, sulphur oxides and hydrocarbons.

6. The emission amount notifying device according to claim 1, 2 or 3, further comprising:
sending means (30) for sending information related to the emission amount detected by said detecting means.

7. An emission charging system for a vehicle comprising:
an engine operation state detecting means (114) for detecting stop/drive of an engine on the vehicle;
wireless communication means (122) mounted on said vehicle and connected to a communication network; and
a management unit (115) connected to said communication network, and charging for emissions of said vehicle, wherein
said management unit performs the charging according to an amount of the emissions of said vehicle based on engine drive information provided from said engine operation state detecting means.

8. The emission charging system for the vehicle according to claim 7, wherein
said vehicle is provided with run/stop detecting means (113), and said system calculates an idling duration, an amount of the emissions corresponding to the idling duration and an amount of a charge for the amount of the emissions from said vehicle-stop information provided from said run/stop detecting means and said engine drive information.

9. The emission charging system for the vehicle according to claim 8, wherein
said run/stop detecting means (113) includes at least one of a vehicle speed sensor, a GPS (Global Positioning System) and an acceleration sensor.

10. The emission charging system for the vehicle according to claim 7, wherein
conditions for setting an amount of the charge include an engine displacement, vehicle position information and/or an ambient temperature at the vehicle position.

11. The emission charging system for the vehicle according to claim 10, wherein
said ambient temperature at said vehicle position is determined by temperature detecting means (126) on said vehicle, or is determined from global temperature information based on the vehicle position information provided from said GPS.

12. The emission charging system for the vehicle according to claim 11, wherein
warning about a failure is sent to a driver of said vehicle when the failure occurs in any one of said engine operation state detecting means, said wireless communication means, said run/stop detecting means and said temperature detecting means mounted on said vehicle.

13. The emission charging system for the vehicle according to claim 7, wherein
said vehicle includes display means (224), and
said management unit sends an amount of money to be charged to said vehicle via said communication network and said wireless communication means to said vehicle, and said display means displays the charged amount of money.

14. The emission charging system for the vehicle according to claim 7, wherein
said charged amount of money is deducted from an account managed by a manager of said vehicle.

15. An vehicle emission charging system comprising:
a vehicle-mounted device (212) having idling detecting means (229) for detecting an idling state of a vehicle, and wireless communication means (222) connected to a communication network;
a management unit (215) receiving the idling information obtained by said vehicle-mounted device over said communication network, and charging for emissions of the vehicle; and
a mobile inspection device (230) performing communication with said vehicle-mounted device over said communication network, and checking a normal operation of the vehicle-mounted device, wherein
said inspection device sends a vehicle ID to said management unit over said communication network, said management unit sends a connection ID for communication with said vehicle-mounted device to said inspection device based on the received vehicle ID, and said inspection device checks the normal operation of said vehicle-mounted device by establishing the communication with said vehicle-mounted device based on said connection ID.

16. An emission charging system for a vehicle comprising:
a vehicle-mounted device (212) having idling detecting means (229) for detecting an idling state of a vehicle, wireless communication means (212) connected to a communication network, and short-range wireless communication means (223) not connected to the communication network;
a management unit (215) receiving the idling information obtained by said vehicle-mounted device over said communication network, and charging for emissions of the vehicle; and
an inspection device (230) communicated with said vehicle-mounted device by short-range wireless communication, and checking a normal operation of said vehicle-mounted device, wherein
said inspection device checks a normal operation of said vehicle-mounted device by performing the short-range wireless communication to communicate directly with said vehicle-mounted device located within a communication-allowed area from the vehicle.

17. The emission charging system for the vehicle according to claim 15 or 16, wherein
penalties such as a fine and/or reduction of license points are imposed on a manager of the vehicle when said inspection device (230) determines an abnormal operation of said vehicle-mounted device (212).

18. The emission charging system for the vehicle according to claim 15 or 16, wherein
said vehicle includes display means (224), and
an amount of money charged to said vehicle is sent from said management unit (215) to said vehicle over said communication network, and said display means displays the charged amount of money.

19. The emission charging system according to claim 18, wherein
said charged amount of money is deducted automatically from a bank account designated by a manager of said vehicle, and, if the deduction is impossible due to an insufficient balance of the account, the management unit provides a notification to said vehicle-mounted device over said communication network to display warning by said display means.

20. The emission charging system for the vehicle according to claim 19, wherein
an extra charge is imposed when payment is impossible due to the insufficient balance of said account.

21. The emission charging system for the vehicle according to claim 15 or 16, wherein
said idling detecting means (229) includes engine operation state detecting means (214) for detecting stop/drive of an engine, and run/stop detecting means (213) for detecting a stop state of the vehicle, and
said idling detecting means (229) recognizes the idling state from engine drive information provided from said engine operation state detecting means and vehicle-stop information provided from said run/stop detecting means.

22. A management unit (115) capable of communication with a vehicle-mounted device (112) on a vehicle, comprising:
receiving means (S21) for receiving times of start and stop of idling of said vehicle from said vehicle-mounted device;
calculating means (S24) for calculating an amount of emissions during idling from said received idling start time and said received idling stop time, and calculating an amount of a charge corresponding to said amount of the emissions; and
sending means (S26) for sending the calculated amount of the charge to said vehicle-mounted device.

23. The management unit according to claim 22, further comprising:
obtaining means (S23) for sending the idling start time and the idling stop time to a server of a weather information center, and obtaining information about temperature change in a corresponding time zone, wherein
said calculating means determines a unit charge from the obtained temperature change information and a displacement of the vehicle.

24. The management unit according to claim 22, wherein
said management unit further sends an instruction to a server of a banking organ to deduct said charged amount from an account of an owner of said vehicle (S25).

25. An inspection device comprising:
input means for inputting a vehicle ID;
sending means (S140) for sending said input vehicle ID to a management unit charging for emissions of a vehicle;
receiving means (S141) for receiving from said management unit a connection ID for communication with a vehicle-mounted device mounted on said vehicle in response to sending of said vehicle ID;
communication establishing means (S142) for establishing the communication with said vehicle-mounted device by using the received connection ID; and
determining means (S143) for checking a normal operation of said vehicle-mounted device by determining whether said communication establishing means established the communication or not.

26. A management unit comprising:
first receiving means (S120) for receiving a vehicle ID, an idling start time and an idling end time from a vehicle-mounted device mounted on a vehicle;
calculating means (S122) for calculating an amount of emissions during an idling duration from the received idling start time and the received idling stop time, and calculating an amount of a charge corresponding to the amount of the emissions;
a database (218) storing a log of the received idling start time, the received idling end time and the calculated amount of the charge for each of the received vehicle IDs;
second receiving means (S201) for receiving the vehicle ID, the idling start time and the idling end time of said vehicle from an inspection device capable of communication with said vehicle-mounted device; and
determining means (S203, S204) for determining whether said database has stored the log of the idling start time and the idling end time of the vehicle ID received from said inspection device or not.

27. The management unit according to claim 26, further comprising:
determination result sending means (S205, S206) for sending results of the determination performed by said determining means to said inspection device.
